# EUROPEAN PATENT APPLICATION

(11) **EP 1 887 253 A1**
(43) Date of publication of application: **13.02.2008**
(21) Application number: 06746855.3
(22) Date of filing: 25.05.2006
(51) Int. Cl.: F16H 47/02

(54) **HYDRAULIC DRIVE DEVICE**

(30) Priority: 26.05.2005 JP 2005154161; 26.05.2005 JP 2005154168
(71) Applicant: HITACHI CONSTRUCTION MACHINERY CO., LTD., Tokyo 112-0004 (JP)
(72) Inventor: YABUUCHI, Yoshitomo, IP Dept., Tsuchiura Works, Tsuchiura-shi, Ibaraki 3000013 (JP); SUGIYAMA, Genroku, IP Dept., Tsuchiura Works, Tsuchiura-shi, Ibaraki 3000013 (JP); KOBAYASHI, Takeshi, IP Dept., Tsuchiura Works, Tsuchiura-shi, Ibaraki 3000013 (JP); NIIDOME, Takashi, IP Dept., Tsuchiura Works, Tsuchiura-shi, Ibaraki 3000013 (JP); KURIHARA, Takeshi, IP Dept., Tsuchiura Works, Tsuchiura-shi, Ibaraki 3000013 (JP)
(74) Representative: Hatzmann, Martin
(86) International application number: PCT/JP2006/310476
(87) International publication number: WO 2006/126646

(57) **Abstract**

A hydraulic drive system is provided with a front casing 50 and a rear ceasing 51. The front casing 50 is formed of a single member, and accommodates therein rotary members, which include a cylinder block 30A and the like, and a part of an output shaft 36 of a hydraulic motor 30 and rotary members, which include a cylinder block 31A and the like, and a part of an output shaft 32 of a hydraulic motor 31. The rear casing 51 is joined to the front casing 50, and has a ports plate 30C and a ports plate 31C arranged therein. The rear casing 51 has an oilway 52 communicating to a first port 30C1 of the ports plate 30C, an oilway 53 communicating to the oilway 52 and also communicating to a first port 31C1 of the ports plate 31C, an oilway 54 communicating to a second port 30C2 of the ports plate 30C, and an oilway 55 communicating to the oilway 54 and also communicating to a second port 31C2 of the ports plate 31C.

## Description

### Technical Field

This invention relates to a hydraulic drive system to be arranged on a construction machine or the like having a running function, such as a wheel loader.

### Background Art

As a conventional technology of this kind, there is the technology disclosed in Patent Document 1. FIG. 5 is a skeleton diagram of a conventional hydraulic drive system, and FIG. 6 is a cross-sectional view illustrating a clutch unit which a second variable-displacement hydraulic motor in the conventional hydraulic drive system is provided with.

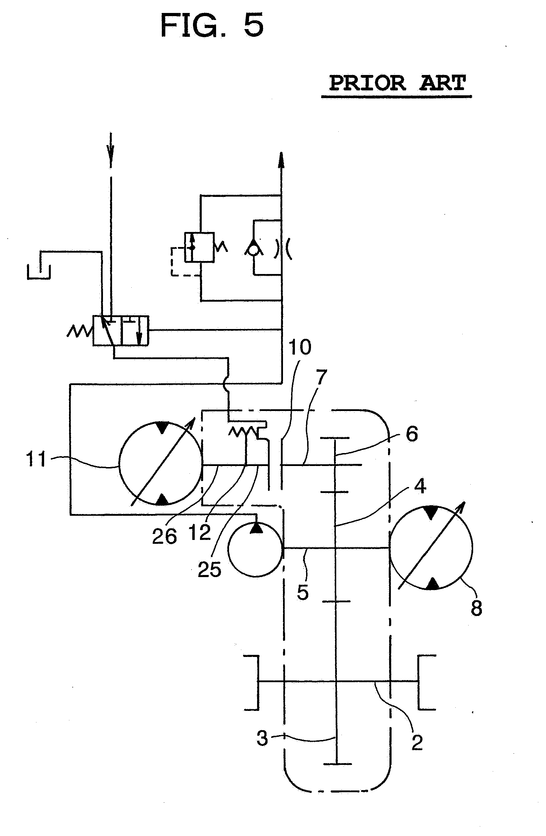

As illustrated in FIG. 5, a first variable-displacement hydraulic motor 8 which is a high-speed low-torque motor is connected to a final output shaft 2 via an output shaft 5, a gear 4 and a gear 3. On the other hand, a second variable-displacement hydraulic motor 11 which is a low-speed high-torque motor is connected to the final output shaft 2 via an output shaft 26, a clutch unit 10, a gear 6, the gear 4 and the gear 3.

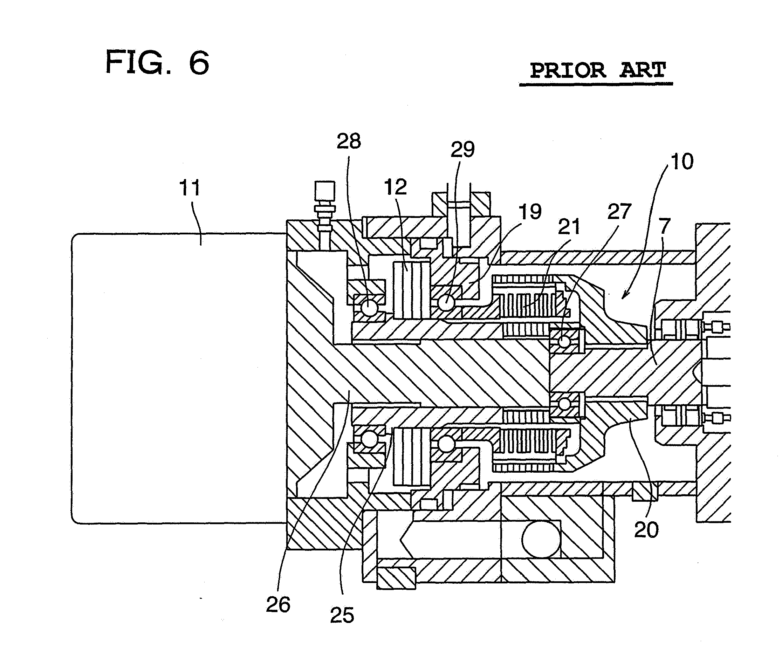

As depicted in FIG. 6, the clutch unit 10 is arranged on an outer side of the output shaft 26 of the second variable-displacement hydraulic motor 11, and includes a clutch drive shaft 25, a drum 20, a clutch driven shaft 7, a piston 19 and a spring 12. The clutch drive shaft 25 is rotatable integrally with the output shaft 26. The drum 20 accommodates therein friction plates 21, and is rotatable integrally with the clutch drive shaft 25 as a result of mutual contact of the friction plates 21. The clutch driven shaft 7 is rotatable integrally with the drum 20. The piston 19 enables selective contact or separation of the friction plates 21. The spring 12 biases the piston 19 such that the friction plates 21 are maintained in contact with each other.

The clutch drive shaft 25 in the clutch unit 10 is supported at opposite ends thereof by bearings 27,28, respectively. Another bearing 29 is also arranged to prevent the transmission of rotation of the clutch drive shaft 25 to the piston 19.

Although not very clear from FIGS. 5 and 6, the above-mentioned first variable-displacement hydraulic motor 8 and second variable-displacement hydraulic motor 11 are each provided, as commonly known in the present field of art, with a cylinder block and also with rotary members including plural pistons, the output shaft 5 or 26 rotatable with the rotary members, and a ports plate having a first port and second port for the supply and drainage of oil, all of which are slidably accommodated within the cylinder block. Described specifically, within a front casing and rear casing that form a main body of the first variable-displacement hydraulic motor 8, the rotary members associated with the first variable-displacement hydraulic motor 8, the output shaft 5 and the ports plate are arranged, and within another front casing and rear casing that form a main body of the second variable-displacement hydraulic motor 11, the rotary members associated with the second variable-displacement hydraulic motor 11, the output shaft 26 and the ports plate are arranged.

In this conventional technology, by rotating the rotary members of the second variable-displacement hydraulic motor 11 with hydraulic force supplied and drained via the first port and second port of the ports plate of the second variable-displacement hydraulic motor 11 in a state that the clutch unit 10 is connected, that is, in a state that the friction plates 21 are maintained in contact with each other by the piston 19 under the force of the spring 12, the output shaft 26 rotates integrally with the rotary members, and the rotation of the output shaft 26 is transmitted to the clutch driven shaft 7 via the clutch drive shaft 25, friction plates 21 and drum 20. As a consequence, an output of the second variable-displacement hydraulic motor 11 and an output of the first variable-displacement hydraulic motor 8 are transmitted to the final output shaft 2, thereby making it possible to perform various work by low-speed running.

On the other hand, by rotating the rotary members of the first variable-displacement hydraulic motor 8 with hydraulic force supplied and drained via the first port and second port of the ports plate of the first variable-displacement hydraulic motor 8 in a state that the clutch unit 10 is disconnected, that is, in a state that the transmission of rotating force between the clutch drive shaft 25 and the clutch driven shaft 7 is cut off by applying hydraulic force to the piston 19 to move the piston 19 against the force of the spring 12 such that the friction plates are separated from each other, the output shaft 5 rotates integrally with the rotary members, and the rotation of the output shaft 5 is transmitted to the final output shaft 2 via the gears 4, 3. As a consequence, only an output of the first variable-displacement hydraulic motor 8 is transmitted to the final output shaft 2 without a loss, thereby making it possible to perform high-speed running (Patent Document 1).
Patent Document 1: JP-A-2000-193065

### Disclosure of the Invention

### Means to be Solved by the Problems

As the first variable-displacement hydraulic motor 8 and second variable-displacement hydraulic motor 11 have the front casings and rear casings to form their main bodies, respectively, the above-described conventional technology requires a large number of parts and hence tends to result in high manufacturing cost. Further, the first variable-displacement hydraulic motor 8 and second variable-displacement hydraulic motor 11 are arranged at positions apart from each other, respectively, thereby leading to an increase in the size of the system. Moreover, piping associated with the respective hydraulic motors 8, 11 are required so that the piping structure tends to become complex.

The present invention has been completed in view of the above-described circumstances of the conventional technology, and therefore, its object is to provide a hydraulic drive system which makes it possible to decrease the number of parts and also to arrange a first variable-displacement hydraulic motor and a second variable-displacement hydraulic motor close to each other.

### Means for Solving the Problem

To achieve the above-described object, the present invention is characterized in that in a hydraulic drive system provided with a first variable-displacement hydraulic motor and a second variable-displacement hydraulic motor, each of which has a cylinder block, rotary members including pistons, an output shaft rotatable integrally with the rotary members and a ports plate having a first port and a second port for the supply and drainage of oil, and capable of outputting an output of the first variable-displacement hydraulic motor and an output of the second variable-displacement hydraulic motor from a single final output shaft via a transmission means, the hydraulic drive system comprises: a front casing formed of a single member and accommodating therein the rotary members and a part of the output shaft of the first variable-displacement hydraulic motor and the rotary members and a part of the output shaft of the second variable-displacement hydraulic motor, and a rear casing joined to the front casing and having the ports plate of the first variable-displacement hydraulic motor and the ports plate of the second variable-displacement hydraulic motor, both arranged therein.

The present invention constructed as described above can decrease the total number of front casing(s) and rear casing(s), that is, can decrease the number of parts because the first variable-displacement hydraulic motor and second variable-displacement hydraulic motor are arranged inside the single combination of front casing and rear casing. In addition, the first variable-displacement hydraulic motor and second variable-displacement hydraulic motor can be arranged close to each other because these first variable-displacement hydraulic motor and second variable-displacement hydraulic motor are arranged inside the single combination of front casing and rear casing.

The present invention may also be characterized in that in the above-described invention, the rear casing has an oilway communicating to the first port of the ports plate of the first variable-displacement hydraulic motor, an oilway communicating to the oilway and also communicating to the first port of the ports plate of the second variable-displacement hydraulic motor, an oilway communicating to the second port of the ports plate of the first variable-displacement hydraulic motor, and an oilway communicating to the oilway and also communicating to the second port of the ports plate of the second variable-displacement hydraulic motor. The invention constructed as described above can form, as oilways in the rear casing, piping that guide oil to be supplied to and drained from the first variable-displacement hydraulic motor and second variable-displacement hydraulic motor.

The present invention may also be characterized in that in the above-described invention, the hydraulic drive system further comprises: an oilway for supplying oil to the transmission means from an oil chamber formed within the front casing. The present invention constructed as described above can effectively use the oil, which exists in the oil chamber formed in the front casing, for the lubrication of the transmission means.

The present invention may also be characterized in that in the above-described invention, the oilway for supplying the oil from the oil chamber to the transmission means is arranged in the front casing. The present invention constructed as described above can realize the lubrication of the transmission means by a simple construction.

The present invention may also be characterized in that in the above-described invention, the transmission means comprises a clutch unit arranged on the output shaft of the second variable displacement hydraulic motor.

The present invention may also be characterized in that in the above-described invention, the clutch unit comprises a clutch drive shaft rotatable integrally with the output shaft of the second variable-displacement hydraulic motor and a clutch driven shaft arranged for selective connection with or disconnection from the clutch drive shaft such that, when connected, transmits the output of the second variable-displacement hydraulic motor to the final output shaft, and the output shaft of the second variable-displacement hydraulic motor and the clutch drive shaft of the clutch unit are constructed of the same member.

In the present invention constructed as described above, the clutch drive shaft included in the clutch unit is constructed of the same member as the output shaft of the second variable-displacement hydraulic motor so that the clutch drive shaft is integrated at one end thereof to the output shaft of the second variable-displacement hydraulic motor. With respect to the one end of the clutch drive shaft, it is, therefore, unnecessary to arrange any bearing to support the clutch drive shaft. By a bearing that supports the other end of the clutch drive shaft, a support structure can be realized for the clutch drive shaft. To support the clutch drive shaft, it is hence sufficient to arrange a bearing in association with only the other end of the clutch drive shaft, thereby making it possible to decrease the number of bearings.

The present invention may also be characterized in that in the above-described invention, the clutch driven shaft of the clutch unit is arranged coaxially with the clutch drive shaft on a part of the clutch drive shaft in the clutch unit, and a shaft length of the clutch driven shaft is set shorter than a shaft length of the clutch drive shaft.

In the present invention constructed as described above, the clutch driven shaft is arranged within the range of the shaft length of the clutch drive shaft. The overall longitudinal dimension along the axis of the output shaft of the second variable-displacement hydraulic motor can be set short by making relatively short the shaft length of the output shaft of the second variable-displacement hydraulic motor and the shaft length of the clutch drive shaft.

The present invention may also be characterized in that in the above-described invention, the hydraulic drive system further comprises: a drum rotatable integrally with the clutch drive shaft of the clutch unit, friction plates for establishing connection or disconnection between the drum and the clutch driven shaft, a piston capable of driving the friction plates to connect the drum and the clutch driven shaft with each other, and a spring biasing the piston, wherein the friction plates, the piston and the spring are arranged within the drum.

The present invention may also be characterized in that in the above-described invention, the transmission means comprises a clutch unit arranged on the output shaft of the first variable displacement hydraulic motor.

The present invention may also be characterized in that in the above-described invention, the clutch unit comprises: a clutch drive shaft rotatable integrally with the output shaft of the first variable-displacement hydraulic motor and a clutch driven shaft arranged for selective connection with or disconnection from the clutch drive shaft such that, when connected, transmits the output of the second variable-displacement hydraulic motor to the final output shaft, and a gear rotatable integrally with the clutch driven shaft to transmit rotation of the output shaft of the second variable-displacement hydraulic motor to the clutch driven shaft.

In the present invention constructed as described above, the clutch driven shaft is not affected by the rotation of the first variable-displacement hydraulic motor upon disconnection of the clutch unit. As a consequence, the relative revolution speed between the clutch drive shaft and the clutch driven shaft can be controlled lower than the revolution speed of the output shaft of the first variable-displacement hydraulic motor.

The present invention may also be characterized in that in the above-described invention, the hydraulic drive system further comprises: an oilway arranged in an upper part of the front casing to communicate an oil chamber in a motor unit, which includes the front casing and the rear casing therein, and a space in a transmission unit, which is arranged in continuation with the motor unit and includes a transmission casing therein, with each other, and an oilway arranged in a lower part of the transmission casing to specify a height of a level of oil contained in the transmission casing.

In the present invention constructed as described above, the oil in the oil chamber of the motor unit can be supplied via the oilway arranged in the upper part of the front casing for the lubrication of the parts in the transmission casing, and the amount of the oil contained in the transmission casing can be controlled at a necessity minimum by the oilway arranged in the lower part of the transmission casing.

The present invention may also be characterized in that in the above-described invention, the hydraulic drive system further comprises: a parking brake capable of braking the output shaft of the first variable-displacement motor.

The present invention can decrease the number of parts and can reduce the manufacturing cost compared with the conventional art, because it has the construction that the first variable-displacement hydraulic motor and second variable-displacement hydraulic motor are arranged inside the combination of front casing and rear casing. Further, the first variable-displacement hydraulic motor and second variable-displacement hydraulic motor can be arranged close to each other, thereby making it possible to realize a reduction in the size of the system. In addition, the piping that guide oil to be supplied to and drained from the first variable-displacement hydraulic motor and second variable-displacement hydraulic motor can be formed as oilways in the rear casing, so that the piping structure can be simplified compared with the conventional technology.

### Best Modes for Carrying out the Invention

Best modes for carrying out the hydraulic drive system according to the present invention will hereinafter be descried on the basis of drawings.

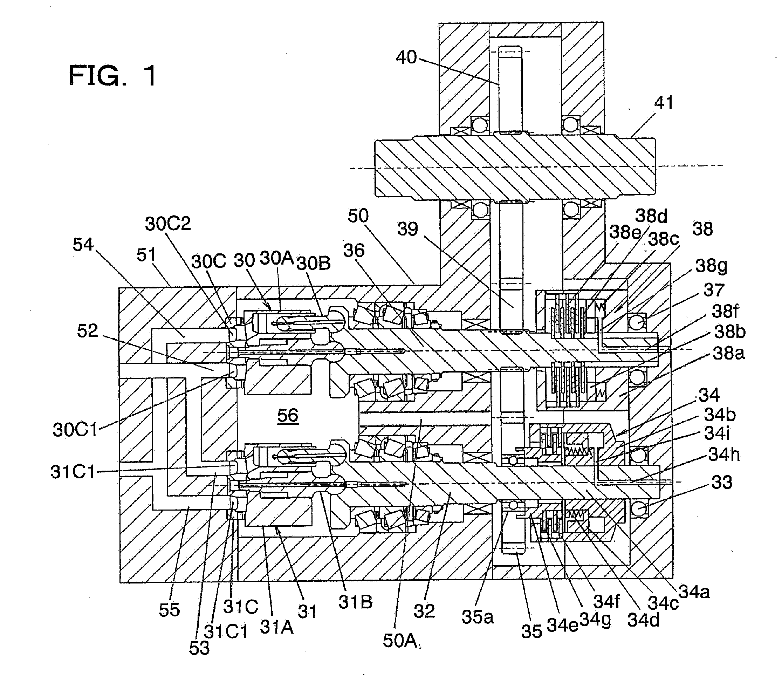

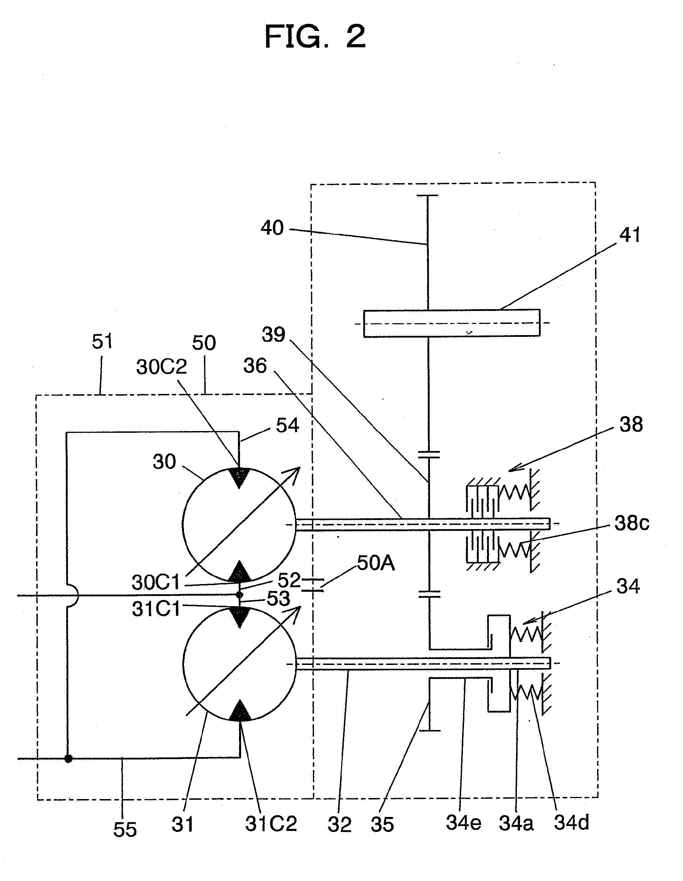

FIG. 1 is a cross-sectional view illustrating a first embodiment of the hydraulic drive system according to the present invention, and FIG. 2 is a skeleton diagram of the first embodiment depicted in FIG. 1. This first embodiment is to be mounted on a construction machine or the like, for example, a wheel loader, and is provided with a first variable-displacement hydraulic motor 30 making up a high-speed low-torque motor and a second variable-displacement hydraulic motor 31 making up a low-speed high-torque motor. An output from the first variable-displacement hydraulic motor 30 and an output of the second variable-displacement hydraulic motor 31 can be outputted from a single final output shaft 41 via a transmission means, specifically gears 35,39,40 and a clutch unit 34.

The clutch unit 34 which can transmit the output of the second variable-displacement hydraulic motor 31 to the final output shaft 41 includes a clutch drive shaft 34a and a clutch driven shaft 34e. The clutch drive shaft 34a is arranged on an output shaft 32 of the second variable-displacement hydraulic motor 31, and rotates integrally with the output shaft 32, while the clutch driven shaft 34e is arranged for selective connection with or disconnection from the clutch drive shaft 34a and, when connected, transmits the output of the second variable-displacement hydraulic motor 31 to the final output shaft 41. In this first embodiment, the output shaft 32 of the second variable-displacement hydraulic motor 31 and the clutch drive shaft 34a of the clutch unit 34 are constructed of the same member. Described specifically, the clutch drive shaft 34a of the clutch unit 34 is formed on an extension of the output shaft 32 of the second variable-displacement hydraulic motor 31.

As shown in FIG. 1, the above-mentioned clutch driven shaft 34e of the clutch unit 34 is arranged coaxially with the clutch drive shaft 34a on a part of the clutch drive shaft 34a, and the shaft length of the clutch driven shaft 34e is set shorter than the shaft length of the clutch drive shaft 34a. This clutch driven shaft 34e is maintained in engagement with the gear 35. The clutch driven shaft 34e and the gear 35 are, therefore, arranged to integrally rotate. It is to be noted that between the clutch drive shaft 34a and the gear 35, the gear 35 is supported by a bearing 35a to prevent the clutch drive shaft 34a and the gear 35 from rotating together.

In addition to the clutch drive shaft 34a and the clutch driven shaft 34e, the clutch unit 34 is also provided with a drum 34b arranged integrally with the clutch drive shaft 34a, in other words, rotatable integrally with the clutch drive shaft 34a. Arranged within the drum 34b are friction plates, for example, stationary friction plates 34g fixed on the clutch driven shaft 34e and movable friction plates 34f which can be brought into contact with the stationary friction plates 34g, a piston 34c capable of pressing the movable friction plates 34f against the stationary friction plates 34g, and a spring 34d biasing the movable friction plates 34f such that they are separated from the stationary friction plates 34g.

In the clutch drive shaft 34a and drum 34b, oilways 34h,34i are formed to guide hydraulic force such that the piston 34c is driven to bring the movable friction plates 34f into contact with the stationary friction plates 34g against the spring force of the spring 34d.

As mentioned above, the clutch drive shaft 34a is integrated at the one end thereof with the output shaft 32 of the second variable-displacement hydraulic motor 31 and is supported at the other end thereof by a bearing 33.

This first embodiment is also provided with a parking brake 38 capable of braking an output shaft 36 of the first variable-displacement hydraulic motor 30. This parking brake 38 includes a housing 38a held in a fixed state and friction plates arranged within the housing 38a, for example, stationary friction plates 38e fixed on the housing 38a and movable friction plates 38d which can be brought into contact with the stationary friction plates 38e. The parking brake 38 is also provided with a piston 38b capable of pressing the movable friction plates 38d against the stationary friction plates 38e and a spring 38c biasing the piston 38b such that the movable friction plates 38d are separated from the stationary friction plates 38e.

In the output shaft 36 and housing 38a of the first variable-displacement hydraulic motor 30, oilways 38f, 38g are formed to guide hydraulic force such that the piston 38b is driven to bring the movable friction plates 38d into contact with the stationary friction plates 38e against the spring force of the spring 38c.

A gear 39 arranged in meshing engagement with the above-mentioned gear 35 is fixed on the output shaft 36 of the first variable-displacement hydraulic motor 30. A gear 40 arranged in meshing engagement with the gear 39 is fixed on the final output shaft 41. It is to be noted that the end portion of the output shaft 36 of the first variable-displacement hydraulic motor 30 is supported by a bearing 37.

In particular, this first embodiment is provided with a front casing 50 formed of a single member, within which a cylinder block 30A of the first variable-displacement hydraulic motor 30, rotary members including plural pistons 30B accommodated within the cylinder block 30A, a part of the output shaft 36, a cylinder block 31A of the second variable-displacement hydraulic motor 31, rotary members including plural pistons 31B accommodated within the cylinder block 31A, and a part of the output shaft 32 are accommodated, respectively. The first embodiment is also provided with a rear casing 51 joined to the front casing 50 and having a ports plate 30C of the first variable-displacement hydraulic motor 30 and a ports plate 31C of the second variable-displacement hydraulic motor 31.

The rear casing 51 is provided with an oilway 52 communicating to a first port 30C1 of the ports plate 30C of the first variable-displacement hydraulic motor 30, an oilway 53 communicating to the oilway 52 and also communicating to a first port 31C1 of the ports plate 31C of the second variable-displacement hydraulic motor 31, an oilway 54 communicating to a second port 30C2 of the ports plate 30C of the first variable-displacement hydraulic motor 30, and an oilway 55 communicating to the oilway 54 and also communicating to a second port 31C2 of the ports plate 31C of the second variable-displacement hydraulic motor 31.

This first embodiment is also provided with an oilway 50A, for example, in the front casing 50 to supply oil from an oil chamber 56 formed in the front casing 50 to the gears 35,39,40 included in the transmission means.

In the first embodiment constructed as described above, the output shafts 36,32 are rotated integrally with the cylinder blocks 30A, 31A by driving the pistons 30B, 31B and rotating the cylinder blocks 30A,31A, for example, with hydraulic force supplied via the oilways 52,53, the first port 30C1 of the ports plate 31 and the first port 31C1 of the ports plate 31C and drained into the oilways 54,55 via the second port 30C2 of the ports plate 30C and the second port 31C2 of the ports plate 31C in a state that the braking of the output shaft 36 of the first variable-displacement hydraulic motor by the parking brake 38 has been cancelled and the clutch unit 34 has been connected, specifically in a state that hydraulic force has been applied to the piston 34c via the oilways 34h,34i shown in FIG. 1 to drive the piston 34c such that the movable friction plates 34f are brought into contact with the stationary friction plates 34g against the force of the spring 34d.

The clutch drive shaft 34a rotates integrally with the rotation of the output shaft 32 of the second variable-displacement hydraulic motor 31, this rotation is transmitted to the gear 35 via the drum 34b, movable friction plates 34f and stationary friction plates 34g, and clutch driven shaft 34e, and the rotation of the gear 35 is transmitted to the final output shaft 41 via the gears 39,40. On the other hand, the rotation of the output shaft 36 of the first variable-displacement hydraulic motor 30 is transmitted to the final output shaft 41 via the gears 39,40. The output of the second variable-displacement hydraulic motor 31 and the output of the first variable-displacement hydraulic motor 30 are, therefore, transmitted to the final output shaft 41, thereby making it possible to perform various work by low-speed running.

When working oil is supplied, for example, to the oilways 52,53, the first port 30C1 of the ports plate 30C and the first port 31C1 of the ports plate 31C in a state that the braking of the output shaft 36 of the first variable-displacement hydraulic motor 30 by the parking brake 38 has been cancelled, the capacity of the second variable-displacement hydraulic motor 31 has been reduced to zero and the clutch unit 34 has been disconnected, specifically in a state that the hydraulic force applied to the piston 34c via the oilways 34h,34i shown in FIG. 1 has been eliminated, the piston 34c has been moved by the force of the spring 34d to separate the movable friction plates 34f from the stationary friction plates 34g and the transmission of rotating force between the clutch drive shaft 34a and the clutch driven shaft 34e has been cut off, the pistons 30B of the first variable-displacement hydraulic motor 30 are driven so that the cylinder block 30A and integrally with the cylinder block 30A, the output shaft 36 are rotated and working oil is drained into the oilway 54 via the second port 30C2 of the ports plate 30C. On the side of second variable-displacement hydraulic motor 31 the capacity of which is 0, on the other hand, the supply and drainage of working oil are cut off so that the pistons 31B are not driven and the cylinder block 31A is not rotated either. Accordingly, the working oil is fed only to the first variable-displacement hydraulic motor 30, and the rotation of the output shaft 36 of the first variable-displacement hydraulic motor 30 is transmitted to the final output shaft 41 without a loss, thereby making it possible to realize high-speed running.

It is to be noted that by applying hydraulic force to the piston 38b via the oilways 38f,38g shown in FIG. 1 and driving the piston 38b against the force of the spring 38c to bring the movable friction plates 38d into contact with the stationary friction plates 38e, the rotation of the output shaft 36 of the first variable-displacement hydraulic motor 30 is prevented and the rotation of the final output shaft 41 is stopped to establish a parking state.

According to the above-described first embodiment, the one end of the clutch drive shaft 34a is integrated with the output shaft 32 of the second variable-displacement hydraulic motor 31 because the clutch drive shaft 34a included in the clutch unit 34 is formed of the same member as the output shaft 32 of the second variable-displacement hydraulic motor 31. With respect to this one end of the clutch drive shaft 34a, it is, therefore, unnecessary to arrange any bearing to support the clutch drive shaft 34a. By the bearing 33 that supports the other end of the clutch drive shaft 34a, a support structure can be realized for the clutch drive shaft 34a. To support the clutch drive shaft 34a, it is hence sufficient to arrange the bearing 33 in association with only one of the opposite ends, that is, the other end of the clutch drive shaft 34a, thereby making it possible to decrease the number of bearings and hence to lower the manufacturing cost.

The first embodiment is constructed such that the clutch driven shaft 34e is arranged coaxially with the clutch drive shaft 34a on the part of the clutch drive shaft 34a and the shaft length of the clutch driven shaft 34e is set shorter than the shaft length of the clutch drive shaft 34a. By setting relatively short the shaft length of the output shaft 32 of the second variable-displacement hydraulic motor 31 and the shaft length of the clutch drive shaft 34a, the overall longitudinal dimension along the output shaft 32 of the second variable-displacement hydraulic motor 31 can, therefore, be set short, thereby enabling a reduction in the size of the system.

Owing to the arrangement of the parking brake 38 capable of braking the output shaft 36 of the first variable-displacement hydraulic motor 30, only a small torque is required for braking so that the parking brake 38 can be built smaller.

In particular, the first variable-displacement hydraulic motor 30 and second variable-displacement hydraulicmotor 31 are arranged inside the single combination of the front casing 50 and the rear casing 51, so that the number of front casing (s) 50 and rear casing (s) 51 can be decreased. Accordingly, the number of parts can be decreased, thereby making it possible to lower the manufacturing cost. As the first variable-displacement hydraulic motor 30 and second variable-displacement hydraulicmotor 31 are arranged inside the single combination of the front casing 50 and the rear casing 51, these first variable-displacement hydraulic motor 30 and second variable-displacement hydraulic motor 31 can be arranged close to each other, thereby making it possible to realize a reduction in the size of the system. The piping for guiding oil, which is to be supplied to and drained from the first variable-displacement hydraulic motor 30 and second variable-displacement hydraulic motor 31, can be formed as the oilways 52-55 in the rear casing 51, so that the piping structure can be simplified.

Owing to the arrangement of the oilway 50A for supplying oil from the oil chamber 56 formed in the front casing 50 to the gears 35, 39, 40 included in the transmission means, the oil in the oil chamber 56 of the front casing 50 can be effectively used for the lubrication of the gears 35, 39, 40. Further, owing to the arrangement of the oilway 50A in the front casing 50, the lubrication of the gears 35,39,40 can be realized by a simple structure.

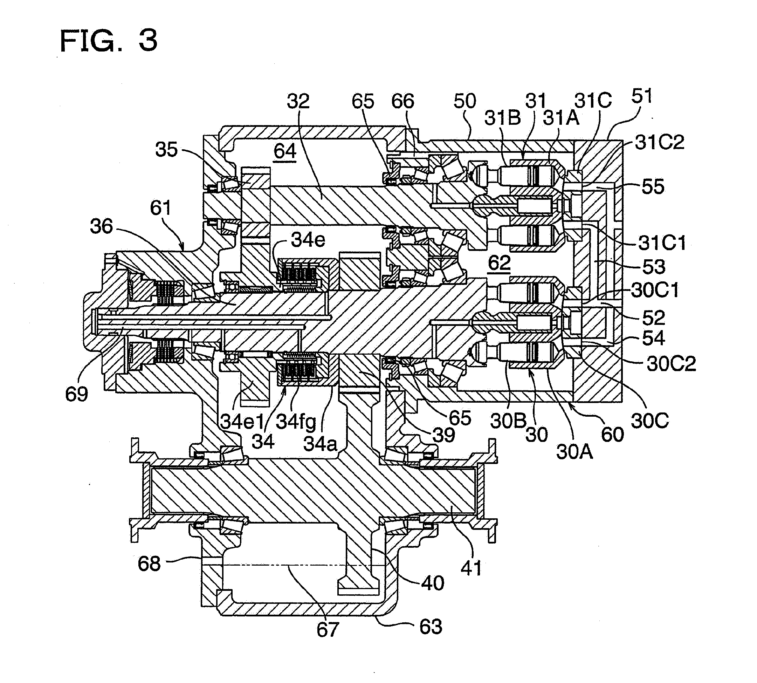

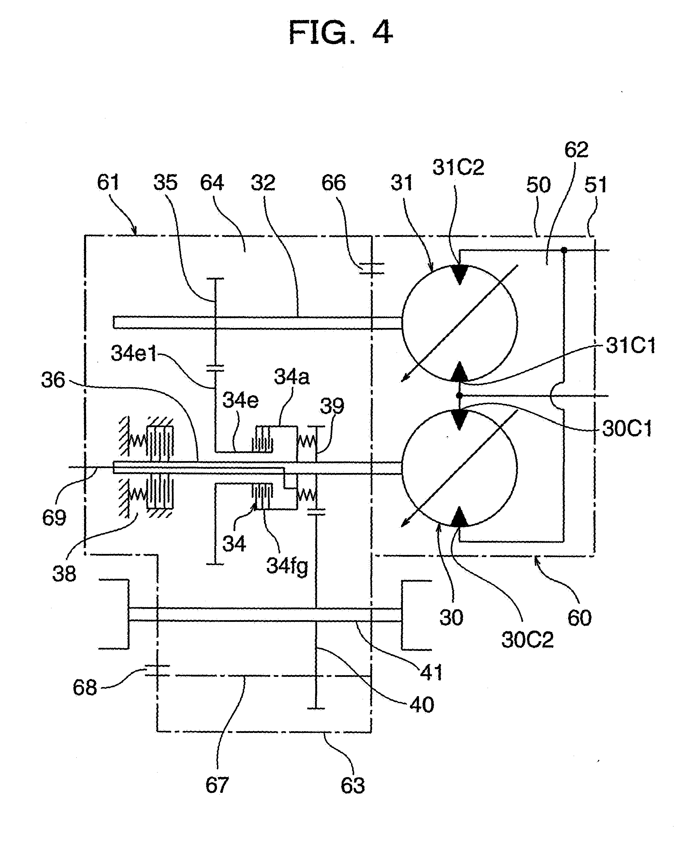

FIG. 3 is a cross-sectional view illustrating a second embodiment of the hydraulic drive system according to the present invention, and FIG. 4 is a skeleton diagram of the second embodiment depicted in FIG. 3. This second embodiment is also to be mounted, for example, on a wheel loader, and has taken into consideration the form of the actual layout in the wheel loader. FIGS. 3 and 4 are drawn upside down compared to the above-described embodiment shown in FIGS. 1 and 2. Described specifically, the elements of structure drawn on the upper sides in FIGS. 3 and 4 are those which can preferably be arranged on the upper side when mounted on a wheel loader, while the elements of structure drawn on the lower sides in FIGS. 3 and 4 are those which can preferably be arranged on the lower side.

As in the above-described first embodiment, a motor unit 60 including the front casing 50 and rear casing 51 and a transmission unit 61 including a transmission casing 63 are also arranged in continuation with each other in this second embodiment, and further, the cylinder block 30A and plural pistons 30B constituting the rotary members of the first variable-displacement hydraulic motor 30, a part of the output shaft 36 of the first variable-displacement hydraulic motor 30, the cylinder block 31A and plural pistons 31B constituting the rotary members of the second variable-displacement hydraulic motor 31 and a part of the output shaft 32 of the second variable-displacement hydraulic motor 31 are accommodated within the front casing 50.

In particular, the clutch unit 34 included in the transmission means that transmits an output of the first variable-displacement hydraulic motor 30 and an output of the second variable-displacement hydraulic motor 31 to the single final output shaft 41 is arranged on the output shaft 36 of the first variable-displacement hydraulic motor 30.

The ports plate 30C of the first variable-displacement hydraulic motor 30 and the ports plate 31C of the second variable-displacement hydraulic motor 31 are accommodated within the rear casing 51. Formed in the rear casing 51 are, as in the above-described first embodiment, the oilway 52 communicating to the first port 30C1 of the ports plate 30C of the first variable-displacement hydraulic motor 30, the oilway 53 communicating to the oilway 52 and also communicating to the first port 31C1 of the ports plate 31C of the second variable-displacement hydraulic motor 31, the oilway 54 communicating to the second port 30C2 of the ports plate 30C of the first variable-displacement hydraulic motor 30, and the oilway 55 communicating to the oilway 54 and also communicating to the second port 31C2 of the ports plate 31C of the second variable-displacement hydraulic motor 31.

The above-described clutch unit 34 includes the clutch drive shaft 34a and the clutch driven shaft 34e. The clutch drive shaft 34a is fixed on the output shaft 36 of the first variable-displacement hydraulic motor 30, and rotates integrally with the output shaft 36. The clutch driven shaft 34e is arranged for connection with the clutch drive shaft 34a and, when connected, transmits an output of the second variable-displacement hydraulicmotor 31 to the final output shaft 41 via friction plates fg.

The second embodiment is also provided with a gear 34e1, which is included in the transmission means that transmits the output of the second variable-displacement hydraulic motor 31 to the final output shaft 41 and which rotates integrally with the clutch driven shaft 34e. A bearing is arranged between the gear 34e1 and the output shaft 36 of the first variable-displacement hydraulic motor 30. Owing to the arrangement of this bearing, the rotation of the output shaft 36 of the first variable-displacement hydraulic motor 30 is not transmitted to the gear 34e1.

These gears 35, 34e1, 39, 40 are arranged such that the gear 35 fixed on the output shaft 32 of the second variable-displacement hydraulic motor 31 and the above-described gear 34e1 rotatable integrally with the clutch driven shaft 34e are maintained in meshing engagement with each other and that, for example, the gear 39 fixed on the output shaft 36 of the first variable-displacement hydraulic motor 30 and the gear 40 fixed on the final output shaft 41 are maintained in meshing engagement.

By these gears 35, 34e1, 39, 40 and the clutch unit 34, there is constructed the transmission means that transmits the output of the first variable-displacement hydraulic motor 30 and the output of the second variable-displacement hydraulic motor 31 to the single final output shaft 41.

In this second embodiment, the upper part of the front casing 50 is provided with an oilway 66 communicating an oil chamber 62 in the motor unit 60, which includes the front casing 50 and the rear casing 51, with a space 64 in the transmission unit 61 arranged in continuation with the motor unit 60 and including the transmission casing 63, and the lower part of the transmission casing 63 is provided with an oilway 68 which specifies the level of an oil level 67 of oil contained in the transmission casing 63.

On a boundary wall that divides the oil chamber 62 of the front casing 50 and the space 64 of the transmission casing 63 from each other, oil seals 65 are arranged to seal peripheries of the output shaft 36 of the first variable-displacement hydraulic motor 30 and the output shaft 32 of the second variable-displacement hydraulic motor 31, respectively.

In an axial direction and radial direction of the output shaft 36 of the second variable-displacement hydraulic motor 30, oilways 69 are formed to guide oil from the outside into the clutch unit 34 and further to guide oil for the operation of the piston capable of pressing the friction plates 34fg or oil for the lubrication of the clutch unit 34.

In the second embodiment constructed as described above, when working oil is supplied via the oilways 52,53 or the oilways 54,55 to rotate the output shaft 36 of the first variable-displacement hydraulic motor 30 and the output shaft 32 of the second variable-displacement hydraulic motor 31 in a state that the parking brake 38 shown in FIG. 4 has been cancelled and the clutch unit 34 has been connected, the rotation of the output shaft 32 of the second variable-displacement hydraulic motor 31 is transmitted to the output shaft 36 of the first variable-displacement hydraulic motor 30 via the gears 35, 34e1, clutch driven shaft 34e and clutch drive shaft 34a, and the rotation of the output shaft 36 of the first variable-displacement hydraulic motor 30 is transmitted to the final output shaft 41 via the gears 39,40. The output of the second variable-displacement hydraulic motor 31 and the output of the first variable-displacement hydraulic motor 30 are, therefore, transmitted to the final output shaft 41, thereby making it possible to perform various work by low-speed running.

On the other hand, when working oil is supplied via the oilway 52 or the oilway 54 to rotate only the output shaft 36 of the first variable-displacement hydraulic motor 30 in a state that the parking brake 38 has been cancelled and the clutch unit 34 has been disconnected, the rotation of the output shaft 36 is transmitted to the final output shaft 41 via the gears 39, 40. As a result, high-speed running can be performed. During this operation, neither supply nor drainage of working oil is performed with respect to the second variable-displacement hydraulic motor 31 the capacity of which is zero, and its output shaft 32 does not rotate. The gears 35, 34e1 and the clutch driven shaft 34e of the clutch unit 34 are, therefore, maintained in non-rotating states.

In the second embodiment constructed as described above, the first variable-displacement hydraulic motor 30 and second variable-displacement hydraulic motor 31 are arranged inside the single combination of the front casing 50 and the rear casing 51 as in the first embodiment. Accordingly, the number of front casing (s) 50 and rear casing (s) 51 can be decreased. In other words, the number of parts can be decreased, thereby making it possible to lower the manufacturing cost. As the first variable-displacement hydraulic motor 30 and second variable-displacement hydraulic motor 31 are arranged inside the single combination of the front casing 50 and the rear casing 51, these first variable-displacement hydraulic motor 30 and second variable-displacement hydraulic motor 31 can be arranged close to each other, thereby making it possible to realize a reduction in the size of the system.

The piping for guiding oil, which is to be supplied to and drained from the first variable-displacement hydraulic motor 30 and second variable-displacement hydraulic motor 31, can be formed as the oilways 52-55 in the rear casing 51, so that the piping structure can be simplified.

In the second embodiment, the clutch unit 34 which can transmit the output of the second variable-displacement hydraulicmotor 31 to the final output shaft 41 is constructed such that the output of the first variable-displacement hydraulic motor 30 and the output of the second variable-displacement hydraulic motor 31 can be transmitted to the final output shaft 41 via the gear 39 fixed on the output shaft 36 of the first variable-displacement hydraulic motor 30. While the clutch unit 34 is disconnected, the clutch driven shaft 34e of the clutch unit 34 is, therefore, not affected by the rotation of the output shaft 36 of the first variable-displacement hydraulic motor 30, in other words, by the rotation of the gear 39 fixed on the output shaft 36 of the first variable-displacement hydraulic motor 30 and the rotation of the gear 40 fixed on the final output shaft 41 and maintained in meshing engagement with the gear 39. It is, accordingly, possible to inhibit any significant increase in the relative revolution speed, which is the difference between the revolution speed of the clutch drive shaft 34a and the revolution speed of the clutch driven shaft 34e in the clutch unit 34. In other words, the above-mentioned relative revolution speed can be maintained below the revolution speed of the output shaft 36 of the first variable-displacement hydraulic motor 30.

It is, therefore, possible to reduce not only fluttering of the friction plates 34fg in the clutch unit 34 and a torque loss due to drag rotation but also heating of the clutch unit 34 and the like and a substantial increase in the temperature of working oil supplied to the clutch unit 34 and the like, all of which are potential problems that may occur as a result of a significant increase in the above-mentioned relative revolution speed. As a result, the clutch unit 34, the first variable-displacement hydraulic motor 30 and the second variable-displacement hydraulic motor 31 can be protected from damages.

As the oil can be supplied from the oil chamber 62 of the front casing 50 to the transmission casing 63 via the oilway 66 formed in the upper part of the front casing 50, good lubrication can be realized for the gears 35, 34e1, 39, 40 and the like in the transmission casing 63. Moreover, the transmission casing 63 is provided in the lower part thereof with the oilway 38 that specifies the height of the oil level 67 of the oil in the transmission casing 63. The amount of the oil contained in the transmission casing 63 can be controlled at a necessity minimum. This makes it possible to reduce the amount of oil to be brought into contact with gear 40 and the like, and hence, to reduce a torque loss and heating of the oil due to the resistance of the oil to agitation by the gear 40 and the like. As a result, the clutch unit 34, the first variable-displacement hydraulic motor 30, the second variable-displacement hydraulic motor 31 and the like can be protected from damages.

For the reasons mentioned above, this second embodiment can realize especially a system having excellent durability and high reliability.

It is to be noted that, while the clutch 34 is disconnected, rotations of the clutch driven shaft 34e, the gear 34e1 rotatable integrally with the clutch driven shaft 34e and the gear 35 fixed on the output shaft 32 of the second variable-displacement hydraulic motor 31 can be stopped, and therefore, an unnecessary torque loss can be reduced. This also contributes to the realization of a system having improved durability and high reliability.

The above-described second embodiment has the construction that the gear 39 is fixed on the output shaft 36 of the first variable-displacement hydraulic motor 30. Instead of such a construction, the second embodiment may have a construction that the gear 39 is arranged integrally with the clutch drive shaft 34a.

### Brief Description of the Drawings

[FIG. 1] A cross-sectional view illustrating a first embodiment of the hydraulic drive system according to the present invention.
[FIG. 2] A skeleton diagram of the first embodiment depicted in FIG. 1.
[FIG. 3] A cross-sectional view illustrating a second embodiment of the hydraulic drive system according to the present invention.
[FIG. 4] A skeleton diagram of the second embodiment depicted in FIG. 3.
[FIG. 5] A skeleton diagram of a conventional hydraulic drive system.
[FIG. 6] A cross-sectional view illustrating a clutch unit arranged in association with a second variable-displacement hydraulic motor in the conventional hydraulic drive system.

## Claims

1. A hydraulic drive system provided with a first variable-displacement hydraulic motor and a second variable-displacement hydraulic motor, each of which has acylinderblock, rotarymembersincludingpistons, anoutput shaft rotatable integrally with said rotary members and a ports plate having a first port and a second port for the supply and drainage of oil, and capable of outputting an output of said first variable-displacement hydraulic motor and an output of said second variable-displacement hydraulic motor from a single final output shaft via a transmission means, comprising:
a front casing formed of a single member and accommodating therein the rotary members and a part of the output shaft of said first variable-displacement hydraulic motor and the rotary members and a part of the output shaft of said second variable displacement hydraulic motor, and
a rear casing joined to said front casing and having the ports plate of said first variable-displacement hydraulic motor and the ports plate of said second variable-displacement hydraulic motor, both arranged therein.

2. A hydraulic drive system according to claim 1, wherein:
said rear casing has an oilway communicating to the first port of the ports plate of said first variable-displacement hydraulic motor, an oilway communicating to said oilway and also communicating to the first port of the ports plate of said second variable-displacement hydraulic motor, an oilway communicating to the second port of the ports plate of said first variable-displacement hydraulic motor, and an oilway communicating to said oilway and also communicating to the second port of the ports plate of said second variable-displacement hydraulic motor.

3. A hydraulic drive system according to claim 2, further comprising:
an oilway for supplying oil to said transmission means from an oil chamber formed within said front casing.

4. A hydraulic drive system according to claim 3, wherein said oilway for supplying the oil from said oil chamber to said transmission means is arranged in said front casing.

5. A hydraulic drive system according to claim 1, wherein:
said transmission means comprises a clutch unit arranged on the output shaft of said second variable-displacement hydraulic motor.

6. A hydraulic drive system according to claim 5, wherein:
said clutch unit comprises a clutch drive shaft rotatable integrally with said output shaft of said second variable-displacement hydraulic motor and a clutch driven shaft arranged for selective connection with or disconnection from said clutch drive shaft such that, when connected, transmits the output of said second variable-displacement hydraulic motor to said final output shaft, and said output shaft of said second variable-displacement hydraulic motor and said clutch drive shaft of said clutch unit are constructed of the same member.

7. A hydraulic drive system according to claim 6, wherein:
said clutch driven shaft of said clutch unit is arranged coaxially with said clutch drive shaft on a part of said clutch drive shaft in said clutch unit, and a shaft length of said clutch driven shaft is set shorter than a shaft length of said clutch drive shaft.

8. A hydraulic drive system according to claim 7, further comprising:
a drum rotatable integrally with said clutch drive shaft of said clutch unit,
friction plates for establishing connection or disconnection between said drum and said clutch driven shaft,
a piston capable of driving said friction plates to connect said drum and said clutch driven shaft with each other, and
a spring biasing said piston such that said drum and said clutch driven shaft are normally maintained disconnected from each other,
wherein said friction plates, said piston and said spring are arranged within said drum.

9. A hydraulic drive system according to claim 1, wherein:
said transmission means comprises a clutch unit arranged on the output shaft of said first variable-displacement hydraulic motor.

10. A hydraulic drive system according to claim 9, wherein said clutch unit comprises:
a clutch drive shaft rotatable integrally with said output shaft of said first variable-displacement hydraulic motor and a clutch driven shaft arranged for selective connection with or disconnection from said clutch drive shaft such that, when connected, transmits the output of said second variable-displacement hydraulic motor to said final output shaft, and
a gear rotatable integrally with said clutch driven shaft to transmit rotation of said output shaft of said second variable-displacement hydraulic motor to said clutch driven shaft.

11. A hydraulic drive system according to claim 4, further comprising:
an oilway arranged in an upper part of said front casing to communicate an oil chamber in a motor unit, which includes said front casing and said rear casing therein, and a space in a transmission unit, which is arranged in continuation with said motor unit and includes a transmission casing therein, with each other, and
an oilway arranged in a lower part of said transmission casing to specify a height of a level of oil contained in said transmission casing.

12. A hydraulic drive system according to claim 1, further comprising:
a parking brake capable of braking said output shaft of said first variable-displacement hydraulic motor.

## Amended claims

### Amended claims under Art. 19.1 PCT

**1.** (Amended) A hydraulic drive system provided with a first variable-displacement, hydraulic, high-speed, low-torque, inclined motor and a second variable-displacement, hydraulic, low-speed, high-torque, inclined motor, each of which has a cylinder block, rotarymembers including pistons, an output shaft rotatable integrally with said rotarymembers and a ports plate having a first port and a second port for the supply and drainage of oil, rockable with said cylinder block and maintained in sliding contact with said cylinder block, and capable of outputting an output of said first variable-displacement, hydraulic, high-speed, low-torque, inclined motor and an output of said second variable-displacement, hydraulic, low-speed, high-torque, inclined motor from a single final output shaft via a transmission means, said hydraulic drive system being also provided with:
a front casing formed of a single member and accommodating therein the rotary members and a part of the output shaft of said first variable-displacement, hydraulic, high-speed, low-torque, inclined motor and the rotary members and a part of the output shaft of said second variable-displacement hydraulic motor, and
a rear casing joined to said front casing and having a guide surface for permitting rocking of the ports plate of said first variable-displacement, hydraulic, high-speed, low-torque, inclined motor and the ports plate of said second variable-displacement, hydraulic, low-speed, high-torque, inclined motor arranged therein, wherein:
said rear casing has an oilway communicating to the first port of the ports plate of said first variable-displacement, hydraulic, high-speed, low-torque, inclined motor, an oilway communicating to said oilway and also communicating to the first port of the ports plate of said second variable-displacement, hydraulic, low-speed, high-torque, inclined motor, an oilway communicating to the second port of the ports plate of said first variable-displacement, hydraulic, high-speed, low-torque, inclined motor, and an oilway communicating to said oilway and also communicating to the second port of the ports plate of said second variable-displacement, hydraulic, low-speed, high-torque, inclined motor.

**2.** (Amended) A hydraulic drive system according to claim 1, further comprising:
an oilway for supplying oil to said transmission means from an oil chamber formed within said front casing.

**3.** (Amended) A hydraulic drive system according to claim 2, wherein said oilway for supplying the oil from said oil chamber to said transmission means is arranged in a partition that divides said transmission means and a motor unit from each other in said front casing.

**4.** (Amended) A hydraulic drive system according to claim 1, wherein:
said transmission means comprises a clutch unit arranged on the output shaft of said second variable-displacement hydraulic motor.

**5.** (Amended) A hydraulic drive system according to claim 4, wherein:
said clutch unit comprises a clutch drive shaft rotatable integrally with said output shaft of said second variable-displacement, hydraulic, low-speed, high-torque, inclined motor and a clutch driven shaft arranged for selective connection with or disconnection from said clutch drive shaft such that, when connected, transmits the output of said second variable-displacement, hydraulic, low-speed, high-torque, inclined motor to said final output shaft, and said output shaft of said second variable-displacement, hydraulic, low-speed, high-torque, inclined motor and said clutch drive shaft of said clutch unit are constructed of the same member.

**6.** (Amended) A hydraulic drive system according to claim 5,
wherein:
said clutch driven shaft of said clutch unit is arranged coaxially with said clutch drive shaft on a part of said clutch drive shaft in said clutch unit, and a shaft length of said clutch driven shaft is set shorter than a shaft length of said clutch drive shaft.

**7.** (Amended) A hydraulic drive system according to claim 6, further comprising:
a drum rotatable integrally with said clutch drive shaft of said clutch unit,
friction plates for establishing connection or disconnection between said drum and said clutch driven shaft,
a piston capable of driving said friction plates to connect said drum and said clutch driven shaft with each other, and
a spring biasing said piston such that said drum and said clutch driven shaft are normally maintained disconnected from each other,
wherein said friction plates, said piston and said spring are arranged within said drum.

**8.** (Amended) A hydraulic drive system according to claim 1, wherein:
said transmission means comprises a clutch unit arranged on the output shaft of said first variable-displacement hydraulic motor.

**9.** (Amended) A hydraulic drive system according to claim 8,
wherein said clutch unit comprises:
a clutch drive shaft rotatable integrally with said output shaft of said first variable-displacement, hydraulic, high-speed, low-torque, inclined motor and a clutch driven shaft arranged for selective connection with or disconnection from said clutch drive shaft such that, when connected, transmits the output of said second variable-displacement, hydraulic, low-speed, high-torque, inclined motor to said final output shaft, and
a gear rotatable integrally with said clutch driven shaft to transmit rotation of said output shaft of said second variable-displacement, hydraulic, low-speed, high-torque, inclined motor to said clutch driven shaft.

**10.** (Amended) A hydraulic drive system according to claim 3, further comprising:
an oilway arranged in an upper part of said front casing to communicate an oil chamber in a motor unit, which includes said front casing and said rear casing therein, and a space in a transmission unit, which is arranged in continuation with said motor unit and includes a transmission casing therein, with each other, and
an oilway arranged in a lower part of said transmission casing to specify a height of a level of oil contained in said transmission casing.

**11.** (Amended) A hydraulic drive system according to claim 1, further comprising:
a parking brake capable of braking said output shaft of said first, variable-displacement, hydraulic, high-speed, low-torque, inclined motor.
